# DEMANDE DE BREVET EUROPEEN

(11) **EP 2 821 333 A1**
(43) Date de publication de la demande: **07.01.2015**
(21) Numéro de dépôt: 14174802.0
(22) Date de dépôt: 27.06.2014
(51) Int. Cl.: B62M 6/45, B62K 5/02, B62K 7/04

(54) **Véhicule utilitaire à assistance électrique**

(30) Priorité: 01.07.2013 FR 1356397
(71) Demandeur: EMD Electro-Mobilité Distribution, 69380 Chasselay (FR)
(72) Inventeur: Tetu, Gérard, 69410 CHAMPAGNE AU MONT D'OR (FR)
(74) Mandataire: Cabinet Plasseraud

(57) **Abrégé**

Véhicule utilitaire (1) à assistance électrique comprenant :
- un châssis (2),
- un système d'entrainement (50),
- un système d'assistance électrique (70) adapté pour, lorsqu'un effort musculaire est exercé sur le système d'entraînement (50) et que le véhicule utilitaire (1) a une vitesse inférieure à une vitesse maximale, développer une puissance d'assistance, le système d'assistance électrique (70) présentant une puissance maximale et étant adapté pour :
- lorsque le véhicule utilitaire (1) a une vitesse supérieure à une vitesse seuil, la vitesse seuil étant inférieure à la vitesse maximale, limiter la puissance d'assistance à une puissance seuil strictement inférieure à la puissance maximale, et
- lorsque le véhicule utilitaire (1) a une vitesse inférieure à la vitesse seuil, ne pas limiter la puissance d'assistance à la puissance seuil, de manière à développer une puissance allant jusqu'à la puissance maximale.

## Description

L'invention se rapporte à un véhicule utilitaire à assistance électrique.

Des considérations en termes d'environnement pour limiter les émissions polluantes mais également de sécurité, de confort et de qualité de vie pour les personnes conduisent à réduire la circulation des véhicules à moteur thermique dans les villes et à proximité immédiate.

Dans ce contexte, les véhicules utilitaires à assistance électrique se sont développés comme une alternative aux véhicules à moteur thermique pour des applications variées parmi lesquelles le transport et la livraison de marchandise dans les derniers kilomètres, la vente ambulante, les services de nettoyage, les services d'entretien des espaces verts ou encore le transport de passagers.

Les véhicules utilitaires à assistance électrique sont des véhicules répondant à un certain nombre de contraintes normatives, imposées par exemple par la norme CE 15-194 actuellement en vigueur relative aux vélos à assistance électrique (VAE). En particulier, ce type de véhicule :
- ne doit développer une puissance d'assistance que lorsque l'utilisateur exerce un effort musculaire sur un système d'entraînement d'une roue motrice du véhicule,
- ne doit pas développer une puissance d'assistance au-delà d'une vitesse maximale du véhicule, fixée en particulier à 25 km/h,
- ne peut développer qu'une puissance d'assistance limitée à une puissance nominale continue déterminée, fixée en particulier à 250 W.

A condition de répondre à ces contraintes, les véhicules utilitaires à assistance électrique peuvent circuler dans les zones à vitesse réduite, par exemple limitées à 30 km/h, et les zones piétonnes des centres et hyper-centres des villes, ou encore sur les pistes cyclables, les couloirs réservés aux transports collectifs.

Les véhicules utilitaires à assistance électrique présentent en outre l'avantage de pouvoir être conduits sans permis particulier, permettant ainsi à des personnes qui ne sont pas titulaires du permis de conduire d'accéder à certaines fonctions valorisantes.

Des véhicules utilitaires à assistance électrique sont notamment décrits dans les documents JP 2006-008005, JP 2005-297643, US 3 598 195 et US 6 158 542.

Toutefois, en raison des faibles puissances mises en oeuvre, les véhicules utilitaires à assistance électrique connus offrent une capacité de charge limitée, notamment de l'ordre de 200 à 250 kg, et ne permettent pas de gravir des pentes présentant une inclinaison importante, par exemple supérieure à 8%.

L'invention vise à pallier les problèmes évoqués ci-dessus.

A cet effet, l'invention propose un véhicule utilitaire à assistance électrique comprenant :
- un châssis comprenant une partie de commande et une partie de chargement attenantes l'une à l'autre selon une direction longitudinale, la partie de commande étant adaptée pour recevoir un utilisateur et comportant au moins une roue, la partie de chargement comportant au moins deux roues écartées l'une de l'autre selon une direction transversale,
- un organe de commande monté sur la partie de commande du châssis et adapté pour commander au moins une roue directrice choisie parmi la roue de la partie de commande et les roues de la partie de chargement,
- un dispositif de chargement monté sur la partie de chargement du châssis et adapté pour recevoir un chargement,
- un système d'entrainement monté sur le châssis et adapté pour entraîner au moins une roue motrice choisie parmi la roue de la partie de commande et les roues de la partie de chargement, à partir d'un effort musculaire exercé par l'utilisateur,
- un système d'assistance électrique monté sur le châssis et adapté pour, lorsqu'un effort musculaire est exercé par l'utilisateur sur le système d'entraînement et que le véhicule utilitaire a une vitesse inférieure à une vitesse maximale, entraîner la roue motrice en développant une puissance d'assistance,
   dans lequel le système d'assistance électrique présente une puissance maximale et est adapté pour :
- lorsque le véhicule utilitaire a une vitesse supérieure à une vitesse seuil, la vitesse seuil étant inférieure à la vitesse maximale, limiter la puissance d'assistance à une puissance seuil strictement inférieure à la puissance maximale, et
- lorsque le véhicule utilitaire a une vitesse inférieure à la vitesse seuil, ne pas limiter la puissance d'assistance à la puissance seuil, de manière à développer une puissance allant jusqu'à la puissance maximale.

Ainsi, le véhicule utilitaire à assistance électrique selon l'invention propose un pilotage particulier du système d'assistance électrique permettant d'accéder à toute la puissance du moteur, supérieure à la puissance seuil, en limitant la vitesse du véhicule utilitaire à une plage restreinte de vitesses réduites, par exemple inférieures à 6 km/h, et ce tout en respectant les contraintes normatives en vigueur. Le système d'assistance électrique peut ainsi être dimensionné pour fournir, à des vitesses réduites, une puissance maximale permettant de déplacer des charges importantes, supérieures à 250 kg et allant par exemple jusqu'à 450 kg, et de gravir des pentes présentant une inclinaison importante, supérieure à 8% et allant par exemple jusqu'à 13%.

Le système d'assistance électrique peut être adapté pour :
- lorsque le véhicule utilitaire présente une inclinaison par rapport à l'horizontale inférieure à un angle représentatif d'une pente positive déterminée, limiter la puissance d'assistance à la puissance seuil, et
- lorsque le véhicule utilitaire présente une inclinaison par rapport à l'horizontale supérieure à l'angle représentatif d'une pente positive déterminée, ne pas limiter la puissance d'assistance à la puissance seuil, de manière à développer une puissance allant jusqu'à la puissance maximale.

Le système d'assistance peut ainsi commander le développement de la puissance d'assistance en fonction de la pente sur laquelle se trouve le véhicule utilitaire. Un tel pilotage peut être réalisé en combinaison avec le pilotage sur la vitesse du véhicule utilitaire de telle manière que, lorsque l'inclinaison par rapport à l'horizontale du véhicule utilitaire dépasse l'angle représentatif d'une montée présentant une pente supérieure à une pente seuil, par exemple 8% ou 10%, est détectée, la vitesse du véhicule utilitaire est limitée à la plage restreinte de vitesses réduites et toute la puissance du moteur jusqu'à sa puissance maximale est accessible.

Dans un autre mode de réalisation, le pilotage du système d'assistance électrique peut être réalisé à partir de la seule inclinaison par rapport à l'horizontale du véhicule utilitaire, indépendamment de la vitesse du véhicule utilitaire. Dans un tel mode de réalisation, le véhicule utilitaire à assistance électrique comprend :
- un châssis comprenant une partie de commande et une partie de chargement attenantes l'une à l'autre selon une direction longitudinale, la partie de commande étant adaptée pour recevoir un utilisateur et comportant au moins une roue, la partie de chargement comportant au moins deux roues écartées l'une de l'autre selon une direction transversale,
- un organe de commande monté sur la partie de commande du châssis et adapté pour commander au moins une roue directrice choisie parmi la roue de la partie de commande et les roues de la partie de chargement,
- un dispositif de chargement monté sur la partie de chargement du châssis et adapté pour recevoir un chargement,
- un système d'entrainement monté sur le châssis et adapté pour entraîner au moins une roue motrice choisie parmi la roue de la partie de commande et les roues de la partie de chargement, à partir d'un effort musculaire exercé par l'utilisateur,
- un système d'assistance électrique monté sur le châssis et adapté pour, lorsqu'un effort musculaire est exercé par l'utilisateur sur le système d'entraînement et que le véhicule utilitaire a une vitesse inférieure à une vitesse maximale, entraîner la roue motrice en développant une puissance d'assistance,
dans lequel le système d'assistance électrique présente une puissance maximale et est adapté pour :
- lorsque le véhicule utilitaire présente une inclinaison par rapport à l'horizontale inférieure à un angle représentatif d'une pente positive déterminée, limiter la puissance d'assistance à la puissance seuil, et
- lorsque le véhicule utilitaire présente une inclinaison par rapport à l'horizontale supérieure à l'angle représentatif d'une pente positive déterminée, ne pas limiter la puissance d'assistance à la puissance seuil, de manière à développer une puissance allant jusqu'à la puissance maximale.

Le système d'assistance électrique peut être adapté pour :
- lorsque le véhicule utilitaire présente une inclinaison par rapport à l'horizontale supérieure à un angle représentatif d'une pente négative déterminée, limiter la puissance d'assistance.

Ainsi, inversement, en descente, la puissance d'assistance peut être limitée.

En particulier, le système d'assistance électrique peut être adapté pour développer une puissance d'assistance fonction de l'effort musculaire exercé.

Le système d'assistance électrique peut comprendre un moteur électrique et une batterie électrique adaptée pour alimenter le moteur électrique en énergie électrique, et le système d'entrainement peut comprendre un organe d'entraînement monté pivotant sur la partie de commande du châssis autour d'un axe transversal et actionnable par l'utilisateur, et un système de transmission reliant l'organe d'entraînement à la roue motrice par l'intermédiaire du moteur électrique.

Par exemple, le moteur électrique peut comprendre un arbre moteur et le système de transmission peut comprendre un premier dispositif de transmission reliant l'organe d'entraînement à l'arbre moteur, et un deuxième dispositif de transmission reliant l'arbre moteur à la roue motrice.

Le premier dispositif de transmission peut comprendre une roue libre interposée entre l'organe d'entraînement et le moteur électrique, un premier organe de transmission reliant l'organe d'entraînement à la roue libre et un deuxième organe de transmission reliant la roue libre à l'arbre moteur.

Le moteur électrique peut être monté sur la partie de chargement du châssis et le système de transmission peut relier le moteur électrique à au moins l'une des roues de la partie de chargement formant la roue motrice.

Le système de transmission peut relier le moteur électrique aux deux roues de la partie de chargement formant les roues motrices par l'intermédiaire d'un différentiel.

Le système de transmission peut être adapté pour que, lorsque la vitesse du véhicule utilitaire atteint la vitesse maximale, la roue motrice entraîne le moteur électrique, le moteur électrique exerçant un couple résistant sur la roue motrice. Le système d'assistance électrique permet ainsi d'obtenir un frein moteur.

Le système d'assistance électrique peut alors être adapté pour, lorsque la roue motrice entraîne le moteur électrique, générer de l'énergie électrique et recharger la batterie électrique.

Le moteur électrique peut, en outre, être adapté pour bloquer la roue motrice en l'absence d'alimentation en énergie électrique par la batterie électrique. Le véhicule utilitaire dispose ainsi d'un frein parking lui permettant de rester immobile même à pleine charge, en pleine pente lorsque la batterie n'alimente plus le moteur électrique, le véhicule utilitaire étant arrêté ou en panne.

Le système d'assistance électrique peut comprendre un réducteur couplé au moteur électrique.

Le système d'assistance électrique peut être adapté pour, lorsque le véhicule utilitaire a une vitesse inférieure à une vitesse d'accompagnement, la vitesse d'accompagnement étant inférieure à la vitesse seuil, entraîner la roue motrice en développant une puissance d'accompagnement indépendante de tout effort musculaire.

Selon des dispositions particulières, le dispositif de chargement peut comprendre un organe de chargement présentant une surface de chargement, l'organe de chargement étant déplaçable par rapport au châssis entre une position de chargement dans laquelle la surface de chargement s'étend globalement dans un plan horizontal, et une position de déchargement écartée de la position de chargement.

Ces dispositions, qui simplifient l'utilisation du véhicule utilitaire et permettent d'en améliorer la modularité, peuvent être mises en oeuvre indépendamment des dispositions particulières définies précédemment concernant le système d'assistance électrique et son pilotage.

Il serait ainsi possible de prévoir un véhicule utilitaire à assistance électrique comprenant :
- un châssis comprenant une partie de commande et une partie de chargement attenantes l'une à l'autre selon une direction longitudinale, la partie de commande étant adaptée pour recevoir un utilisateur et comportant au moins une roue, la partie de chargement comportant au moins deux roues écartées l'une de l'autre selon une direction transversale,
- un organe de commande monté sur la partie de commande du châssis et adapté pour commander au moins une roue directrice choisie parmi la roue de la partie de commande et les roues de la partie de chargement,
- un dispositif de chargement monté sur la partie de chargement du châssis et adapté pour recevoir un chargement,
- un système d'entrainement monté sur le châssis et adapté pour entraîner au moins une roue motrice choisie parmi la roue de la partie de commande et les roues de la partie de chargement, à partir d'un effort musculaire exercé l'utilisateur,
- un système d'assistance électrique monté sur le châssis et adapté pour, lorsqu'un effort musculaire est exercé par l'utilisateur sur le système d'entraînement et que le véhicule utilitaire a une vitesse inférieure à une vitesse maximale, entraîner la roue motrice en développant une puissance d'assistance,
dans lequel le dispositif de chargement comprend un organe de chargement présentant une surface de chargement, l'organe de chargement étant déplaçable par rapport au châssis entre une position de chargement dans laquelle la surface de chargement s'étend globalement dans un plan horizontal, et une position de déchargement écartée de la position de chargement.

Que ce soit en lien avec les dispositions particulières définies précédemment concernant le système d'assistance électrique et son pilotage ou indépendamment de celles-ci, dans des modes de réalisations particuliers, le véhicule électrique peut comprendre une ou plusieurs des dispositions suivantes :
- l'organe de chargement est monté pivotant autour d'un axe de pivotement horizontal, la surface de chargement étant inclinée par rapport au plan horizontal dans la position de déchargement,
- l'axe de pivotement est transversal,
- la partie de chargement comporte un essieu portant les roues, l'axe de pivotement étant agencé du côté opposé à la partie de commande par rapport à l'essieu,
- le véhicule utilitaire à assistance électrique comprend en outre au moins une béquille montée déplaçable sur le châssis entre une position déployée dans laquelle ladite béquille repose sur une surface sur laquelle se tient le véhicule utilitaire, et une position escamotée, dans laquelle ladite béquille n'interfère pas avec la surface sur laquelle se tient le véhicule utilitaire,
- la béquille dans la position déployée est agencée sensiblement en correspondance avec l'organe de chargement en position de déchargement,
- le dispositif de chargement comprend un organe d'actionnement s'étendant entre le châssis et l'organe de chargement, l'organe d'actionnement étant déplaçable entre une position inactive dans laquelle ledit organe d'actionnement maintient l'organe de chargement en position de chargement, et une position active dans laquelle ledit organe d'actionnement place l'organe de chargement en position de déchargement, le dispositif de chargement étant adapté pour faire passer l'organe d'actionnement de la position inactive à la position active uniquement lorsque la béquille est dans la position déployée ; ces dispositions permettent d'assurer une stabilité au véhicule utilitaire lors du déchargement de charges importantes.

En particulier, la partie de commande et la partie de chargement peuvent former respectivement des parties avant et arrière du véhicule utilitaire, la roue de la partie de commande étant directrice.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation en perspective de dessus d'un véhicule utilitaire à assistance électrique selon un mode de réalisation de l'invention,
- la figure 2 est une représentation en perspective de dessous du véhicule utilitaire de la figure 1, illustrant un côté d'un système d'entraînement et d'un système d'assistance électrique du véhicule utilitaire,
- la figure 3 est une représentation analogue à celle de la figure 2, illustrant un côté opposé du système d'entraînement et du système d'assistance électrique,
- la figure 4 est un diagramme illustrant un pilotage du système d'assistance électrique du véhicule utilitaire de la figure 1,
- la figure 5 est un diagramme illustrant une variante du pilotage du système d'assistance électrique du véhicule utilitaire de la figure 1,
- la figure 6 est une représentation en vue latérale du véhicule utilitaire de la figure 1, illustrant un organe de chargement en position de chargement, des béquilles agencées en correspondance avec l'organe de chargement étant en position escamotée,
- la figure 7 est une représentation en vue latérale du véhicule utilitaire de la figure 1, illustrant l'organe de chargement en position de déchargement, des béquilles agencées en correspondance avec l'organe de chargement étant en position déployée.

Sur les figures, les mêmes références désignent des éléments identiques ou analogues.

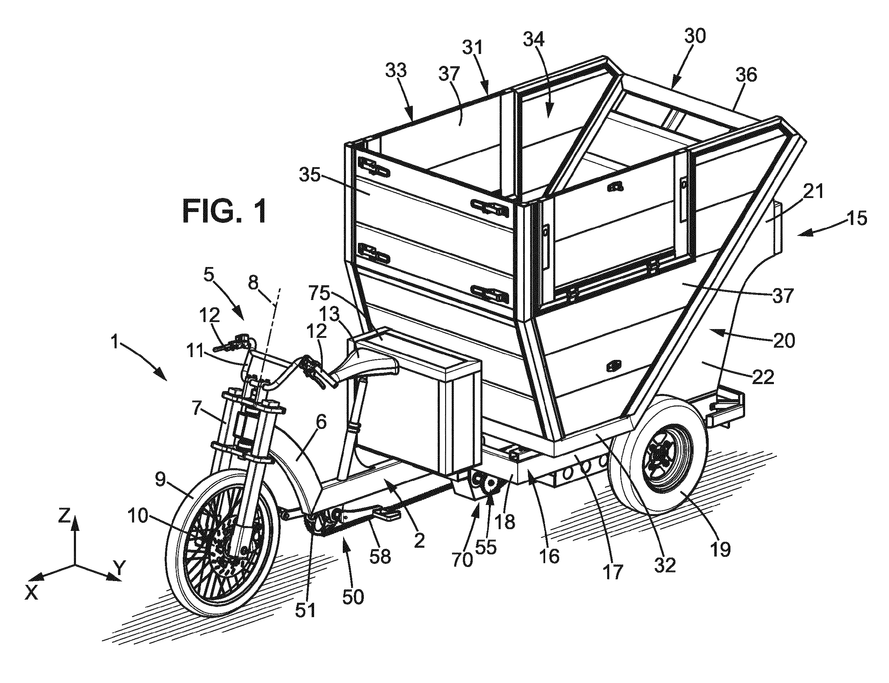

La figure 1 représente un véhicule utilitaire à assistance électrique se présentant, dans le mode de réalisation représenté, sous la forme d'un tricycle adapté pour transporter un chargement ou triporteur 1.

Le triporteur 1 comprend un châssis 2 s'étendant globalement selon une direction longitudinale X entre une partie de commande 5, avant, et une partie de chargement 15, arrière.

La partie de commande 5 comprend un cadre 6 et une fourche 7 montée pivotante selon un axe de pivotement 8 s'étendant sensiblement selon une direction verticale Z perpendiculaire à la direction longitudinale X, à une extrémité avant du cadre 6. Une roue avant 9 est montée pivotante selon un axe de rotation perpendiculaire à l'axe de pivotement X de la fourche 7, à une extrémité inférieure de la fourche 7. La fourche 7 est équipée d'un système de freinage 10, par exemple à disques, permettant de freiner ou d'immobiliser la roue avant 9. Le cas échéant, la fourche 7 peut être adaptée pour amortir les chocs sur la roue avant 9. A cette fin, la fourche 7 peut être télescopique.

Un organe de commande, se présentant sous la forme d'un guidon 11, est monté sur une extrémité supérieure de la fourche 7 opposée à la roue avant 9 pour commander le pivotement de la fourche 7 autour de son axe de pivotement 8 et ainsi orienter la roue avant 9 directrice et le triporteur 1. Le guidon 11 comporte des poignées 12 pourvues de différents organes d'activation adaptés notamment pour activer le système de freinage, des clignotants, un avertisseur sonore et autre. Une selle 13 adaptée pour recevoir un utilisateur est montée de manière réglable en hauteur sur le cadre 6, à distance de la fourche 7, de manière à permettre à l'utilisateur de saisir le guidon lorsqu'il est assis sur la selle 13.

La partie de chargement 15 comprend un bâti 16 prolongeant le cadre 6 de la partie de commande 5 vers l'arrière. Le bâti 16 s'étend globalement horizontalement et comprend deux longerons 17 selon la direction longitudinale X et deux traverses 18 selon une direction transversale Y perpendiculaire à la direction longitudinale X. Le bâti 16 est monté sur un essieu portant deux roues arrières 19 écartées l'une de l'autre selon la direction transversale Y et pivotantes selon un axe de rotation s'étendant selon la direction transversale Y. Un système de freinage des roues arrières peut également être prévu.

La partie de chargement 15 comprend également un bras 20 s'étendant depuis une base 21 solidaire d'une extrémité arrière du bâti 16 écartée selon la direction longitudinale X de la partie de commande 5, jusqu'à une extrémité libre 22 écartée selon la direction verticale Z du bâti 16. Le bras 20 est incliné depuis la base 21 jusqu'à l'extrémité libre 22 en s'écartant de la partie de commande 5.

Un dispositif de chargement 30 comprenant un organe de chargement sous la forme d'une benne 31 est monté sur le bâti 16 et le bras 20. La benne 31 comporte un fond 32 et une paroi latérale 33 s'étendant depuis le fond 32 et définissant, à l'opposé du fond 32, une ouverture de chargement 34. Dans le mode de réalisation, la paroi latérale comprend un panneau avant 35 sensiblement vertical, agencé au voisinage de la selle 13, un panneau arrière 36 incliné par rapport à la direction verticale Z depuis le fond 32 en s'écartant de la partie de commande 5, et deux panneaux latéraux 37 sensiblement verticaux, de forme trapézoïdale, entre le panneau avant 35 et le panneau arrière 36. L'inclinaison du panneau arrière 36 correspond à l'inclinaison du bras 20.

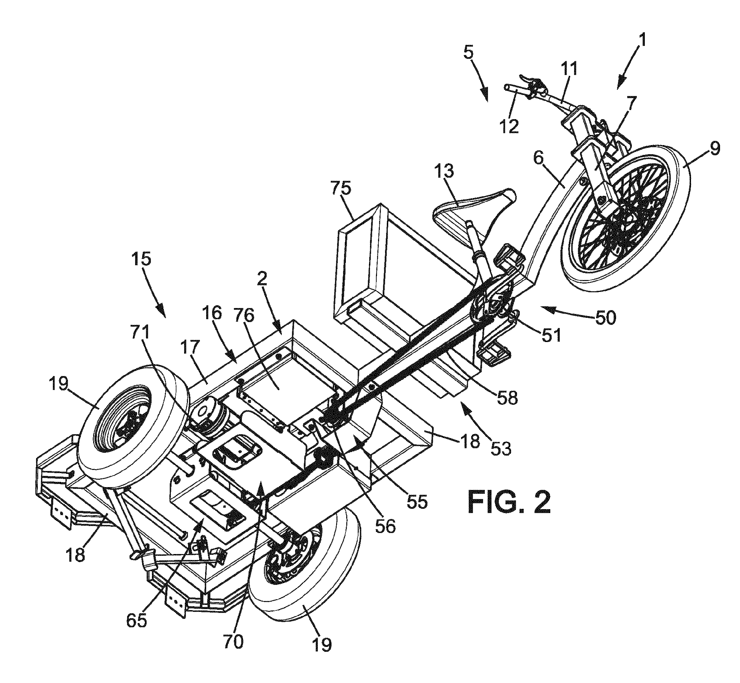

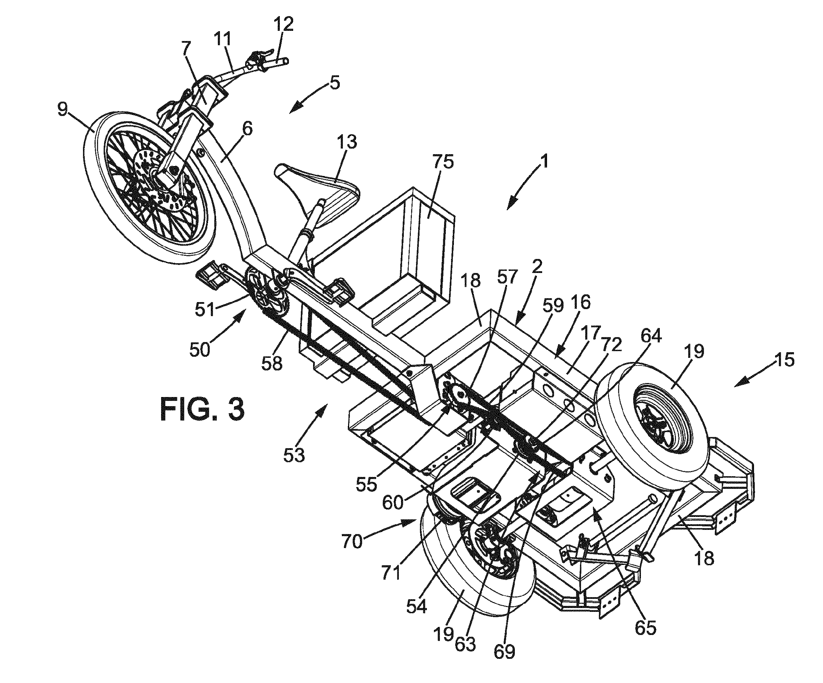

Sur les figures 2 et 3, le triporteur comprend également :
- un système d'entrainement 50 adapté pour entraîner les roues arrières 19, motrices, à partir d'un effort musculaire exercé par l'utilisateur, et
- un système d'assistance électrique 70 adapté pour entraîner les roues arrières 19 en développant une puissance d'assistance.

Le système d'entrainement 50 comprend un organe d'entraînement sous la forme d'un pédalier 51 monté pivotant autour d'un axe transversal sur le cadre 6 de la partie de commande 5, et agencé sensiblement sous la selle 13 pour permettre à l'utilisateur de faire tourner le pédalier 51 autour de son axe en appuyant sur des pédales du pédalier 51.

Le système d'assistance électrique 70 comprend un moteur électrique 71 monté sur le bâti 16 de la partie de chargement 15. Plus particulièrement, le moteur électrique 71 est monté entre les longerons 17 du bâti 16 de telle manière qu'une partie du moteur électrique 71 dépasse d'une surface inférieure des longerons 17 en regard d'une surface sur laquelle se tient le triporteur 1. Le moteur électrique 71 est réversible et comprend un arbre moteur 72, le cas échéant couplé à un réducteur, pouvant tourner autour d'un axe propre dans un sens ou dans l'autre suivant que le triporteur 1 circule en marche avant ou en marche arrière. Le moteur électrique 71 est adapté pour développer une puissance maximale supérieure à une puissance seuil, par exemple de 250 W. En particulier, le moteur électrique 71 peut développer une puissance maximale supérieure à au moins deux fois la puissance seuil, de préférence supérieure à trois ou quatre fois la puissance seuil, et notamment de l'ordre de cinq fois la puissance seuil. A titre d'exemple non limitatif, le moteur électrique 71 est un moteur sans balai de 48 V présentant une puissance maximale de l'ordre de 1,2 kW montant jusqu'à 2500 tours/min et délivrant un couple allant jusqu'à 130 n.m.

Pour alimenter le moteur électrique 71 en énergie électrique, le système d'assistance électrique 70 comprend également une batterie électrique 75. Dans le mode de réalisation représenté, la batterie électrique 75 est montée sur une extrémité arrière du cadre 6 de la partie de commande 5, attenante à une extrémité avant du bâti 16 de la partie de chargement 15. La batterie électrique 75 est alors disposée derrière la selle 13 et devant le panneau avant 35 de la benne 31. La batterie électrique 75 est choisie pour permettre au moteur électrique 71 d'atteindre la puissance maximale. A titre d'exemple non limitatif, la batterie électrique 75 est une batterie Lithium Fer Phosphate de 50 A et 48 V délivrant une puissance électrique de l'ordre de 2400 W.

Un système de transmission 52 relie le pédalier 51 aux roues arrières 19 par l'intermédiaire du moteur électrique 71.

En particulier, le système de transmission 52 comprend un premier dispositif de transmission 53 reliant le pédalier 51 à l'arbre moteur 72. Le premier dispositif de transmission 53 comprend un premier pignon 54 monté sur l'arbre moteur 72 et une roue libre 55 interposée entre le pédalier 51 et le moteur électrique 71. Une première chaîne 58, formant un premier organe de transmission, engrène sur le pédalier 51 et sur un premier pignon 56 de la roue libre 55 situé du même côté du cadre 6 de la partie de commande 5 que le pédalier 51. Une deuxième chaîne 59, formant un deuxième organe de transmission, engrène sur un deuxième pignon 57 de la roue libre 55 situé de l'autre côté du cadre 6 de la partie de commande 5, et sur le premier pignon 54 de l'arbre moteur 72. Un pignon additionnel 60 est prévu pour tendre la deuxième chaîne 59.

Le système de transmission 52 comprend également un deuxième dispositif de transmission 63 reliant l'arbre moteur 72 aux roues arrières 19 du triporteur 1. Le deuxième dispositif de transmission 63 comprend un deuxième pignon 64 porté par l'arbre moteur 72, un différentiel 65 relié aux roues arrières 19 et une chaîne de transmission 69 s'étendant entre le deuxième pignon 64 de l'arbre moteur 72 et le différentiel 65.

En variante, le système de transmission 52 mettant en oeuvre des pignons et des chaînes pourrait être remplacé par tout système de transmission adapté pour transmettre le mouvement de rotation du pédalier 51 aux roues arrières 19. En particulier, un système de transmission mettant en oeuvre une ou plusieurs courroies, par exemple crantées, à la place des chaînes pourrait être prévu. Un tel système de transmission peut alors comprendre un ou plusieurs galets tendeurs en contact avec chacune des courroies pour la tendre. Les galets tendeurs peuvent être montés déplaçables pour faire varier la tension de la courroie.

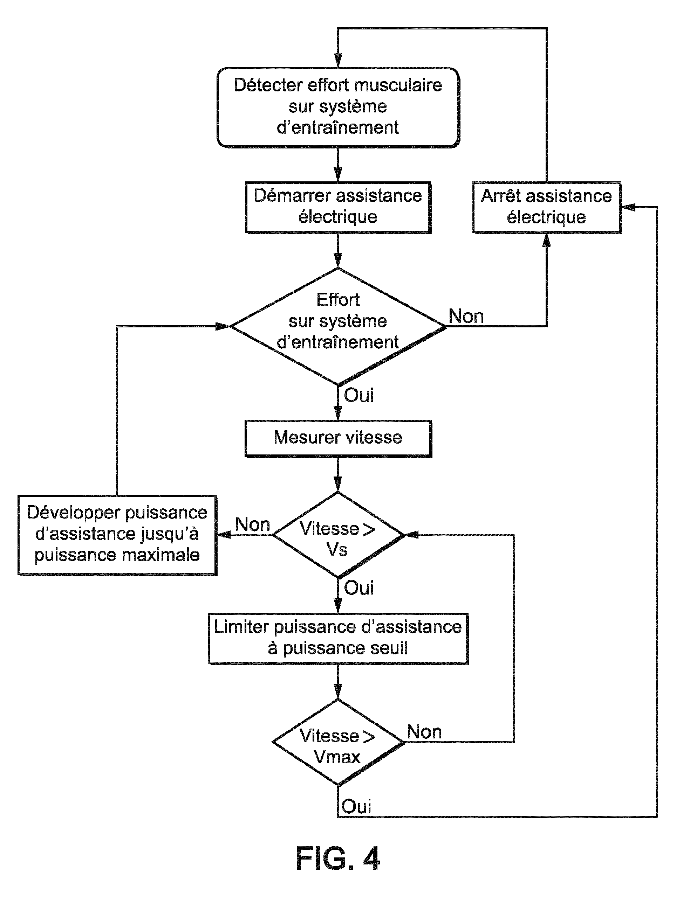

Sur la figure 4, le système d'assistance électrique 70 est par ailleurs doté d'une unité centrale 76 électronique adaptée pour que le moteur électrique 71 ne développe une puissance d'assistance que lorsqu'un effort musculaire est exercé par l'utilisateur sur le pédalier 51 et que le triporteur 1 a une vitesse inférieure à une vitesse maximale Vmax, par exemple fixée à 25 km/h. A cette fin, l'unité centrale 76 peut comprendre des capteurs adaptés pour détecter l'effort musculaire sur le pédalier 51 et mesurer la vitesse du triporteur 1, et un processeur relié au moteur électrique 71 et à la batterie électrique 75 pour les activer uniquement dans les conditions voulues. Parmi les capteurs mis en oeuvre, un capteur de couple peut être monté sur le pédalier 51 pour détecter l'effort musculaire peuvent comprendre. Un capteur de fréquence de pédalage peut également être prévu sur le pédalier 51 pour permettre d'adapter la puissance d'assistance développée par le moteur électrique 71 à l'effort musculaire exercé. De façon complémentaire ou alternative, la détection de la pression exercée par l'utilisateur sur les pédales peut être réalisée au moyen d'un capteur incrémental monté sur le pédalier 51 ou la roue libre 55. Un tel capteur incrémental comprend un codeur solidaire d'une partie pivotante du pédalier 51, tel qu'un plateau, ou de la roue libre 55, tel qu'un pignon, et un récepteur monté sur une partie fixe du véhicule. Le codeur, sous la forme d'un disque, comprend une ou plusieurs pistes concentriques et pourvues chacune d'un nombre élevé d'éléments d'excitation, par exemple plusieurs dizaines, voire plusieurs centaines. Le receveur détecte le passage des éléments d'excitation et génère un signal correspondant. La vitesse du triporteur 1 peut être mesurée par tout capteur approprié, tel qu'un capteur de vitesse, un système GPS ou autre. L'unité centrale 76 peut également comprendre un capteur d'inclinaison par rapport à l'horizontale du triporteur 1 adapté pour déterminer un angle d'inclinaison du triporteur 1 par rapport à l'horizontal et un sens d'inclinaison, c'est-à-dire vers le haut, la partie de commande 5 étant située plus haut que la partie de chargement 15, ou vers le bas, la partie de chargement 15 étant située plus haut que la partie de commande 5. Un tel capteur d'inclinaison permet de renseigner l'unité centrale 76 sur le degré et l'orientation positive (montée) ou négative (descente) d'une pente sur laquelle le triporteur 1 se trouve. Un capteur de poids adapté pour mesurer le poids du triporteur 1, de l'utilisateur et de la charge peur également être prévu.

Pour permettre au triporteur 1 d'emporter des charges importantes et de gravir des pentes très inclinées tout en répondant aux exigences des normes en vigueur concernant les véhicules à assistance électrique, l'unité centrale 76 est, par ailleurs, adaptée pour permettre au moteur électrique 71 de développer toute la puissance d'assistance nécessaire, le cas échéant jusqu'à la puissance maximale du moteur électrique 71, dans une plage réduite de faibles vitesses du triporteur 1, par exemple inférieures à 6 km/h. En particulier, le processeur de l'unité centrale 76 pilote le moteur électrique 71 et la batterie électrique 75 de telle manière que :
- lorsque le triporteur 1 a une vitesse supérieure à une vitesse seuil Vs, notamment égale à 6 km/h, la puissance d'assistance est limitée à une puissance seuil, notamment de 250 W, strictement inférieure à la puissance maximale, et
- lorsque le triporteur 1 a une vitesse inférieure à la vitesse seuil Vs, la puissance d'assistance n'est pas limitée à la puissance seuil et peut atteindre la puissance maximale.

A titre d'exemple non limitatif, le triporteur 1 équipé du moteur électrique 71 et de la batterie électrique 75 décrits précédemment peut transporter une charge de 350 kg à 450 kg, portant le poids total en charge (PTAC) du triporteur à 650 kg, sur des pentes inclinées à plus de 10 % et allant jusqu'à 13 %. Un tel triporteur 1 présente, par ailleurs, une autonomie de 80 km à 100 km sur plat et pentes jusqu'à 10 %, avec un temps de charge de la batterie électrique de l'ordre de 5 h.

Comme indiqué précédemment, le système d'assistance électrique 70 est adapté pour développer une puissance d'assistance en marche avant comme en marche arrière du triporteur 1. Par ailleurs, pour faciliter les déplacements de l'utilisateur, notamment dans des zones piétonnes, le triporteur 1 peut être équipé d'une fonction d'accompagnement permettant au moteur électrique 71, lorsque le triporteur 1 a une vitesse inférieure à une vitesse d'accompagnement, par exemple fixée à 3 km/h, d'entraîner les roues arrières 19 avec une puissance d'accompagnement indépendante de tout effort musculaire, y compris en l'absence d'effort musculaire.

L'activation et l'état de fonctionnement du triporteur 1 et du système d'assistance électrique 70 peuvent être commandés par l'utilisateur au moyen d'organes d'activation prévus sur le guidon 11, par exemple au voisinage des poignées 12. Un ou plusieurs dispositifs d'affichage donnant des indications sur l'activation et l'état de fonctionnement peuvent également y être prévus.

Le moteur électrique 71 peut également être utilisé comme frein moteur pour limiter la vitesse du triporteur 1 dans les descentes. Ainsi, lorsque la vitesse du triporteur 1 atteint la vitesse maximale Vmax, de 25 km/h par exemple, le système d'assistance électrique 70 peut être commandé pour transformer le moteur électrique 71 en générateur entraîné par les roues arrières 19. Le moteur électrique 71 exerce alors un couple résistant sur les roues arrières 19 qui freinent le triporteur 1. Dans cet état, le système d'assistance électrique 70 peut également être adapté pour générer de l'énergie électrique à partir de la rotation des roues arrières 19, énergie électrique qui peut être utilisée pour recharger la batterie électrique 75. Selon des dispositions particulières, le moteur électrique 71 peut être utilisé comme frein parking bloquant les roues arrières 19 du triporteur 1 en l'absence d'alimentation en énergie électrique par la batterie électrique 75.

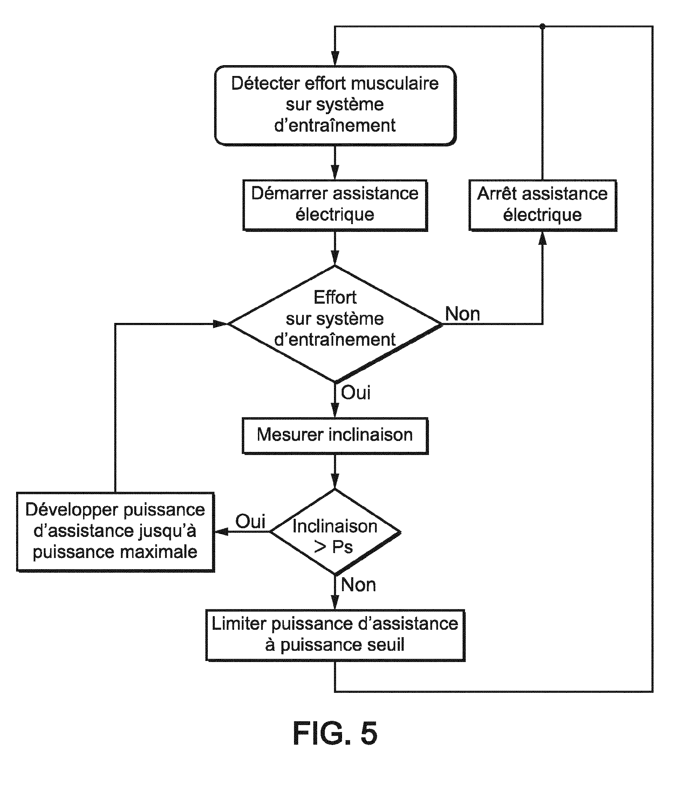

La figure 5 illustre le pilotage en puissance du système d'assistance électrique 70 selon un autre mode de réalisation.

Dans ce mode de réalisation, indépendamment de la vitesse du triporteur 1, pour permettre au triporteur 1 de gravir des pentes très inclinées, par exemple supérieure à 8% ou 10%, l'unité centrale 76 est adaptée pour permettre au moteur électrique 71 de développer toute la puissance d'assistance nécessaire, le cas échéant jusqu'à la puissance maximale du moteur électrique 71, lorsque le capteur d'inclinaison détecte un angle représentatif d'une montée dont la pente P est supérieure à une pente seuil Ps, par exemple supérieure à 8% ou 10%. Ces dispositions permettent de s'assurer que le triporteur pourra démarrer une montée inclinée avec un couple suffisant, le cas échéant en tenant compte du poids du triporteur 1, de l'utilisateur et de la charge mesurée par le capteur de poids. Une fois la montée détectée, la puissance d'assistance pourra varier sur la base du signal délivré par le capteur incrémental représentatif de la vitesse. En revanche, lorsque le capteur d'inclinaison détecte un angle A représentatif d'une montée inférieure à la pente seuil, la puissance d'assistance peut être limitée à la puissance seuil.

A l'inverse lorsque le capteur d'inclinaison détecte une pente négative présentant une degré supérieur un degré seuil, la puissance d'assistance peut être limitée.

Dans un autre mode de réalisation, un pilotage de la puissance d'assistance en fonction de l'inclinaison et de la vitesse du triporteur peut être prévu. Lorsque la montée présente une pente supérieure à la pente seuil, la vitesse du triporteur 1 peut être limitée à la plage restreinte de vitesses réduites et toute la puissance du moteur jusqu'à sa puissance maximale est accessible.

L'invention décrite en relation avec un triporteur 1 entraînant deux roues arrières 19 motrices au moyen d'un pédalier 51 n'est pas limitée à un tel mode de réalisation du véhicule utilitaire. L'invention s'applique à tout véhicule utilitaire comprenant trois roues ou plus et à tout système d'entraînement approprié mettant en oeuvre la force musculaire de l'utilisateur appliquée à une ou plusieurs roues motrices, arrière ou avant. L'agencement du système d'assistance électrique et du système de transmission peut être adapté en conséquence.

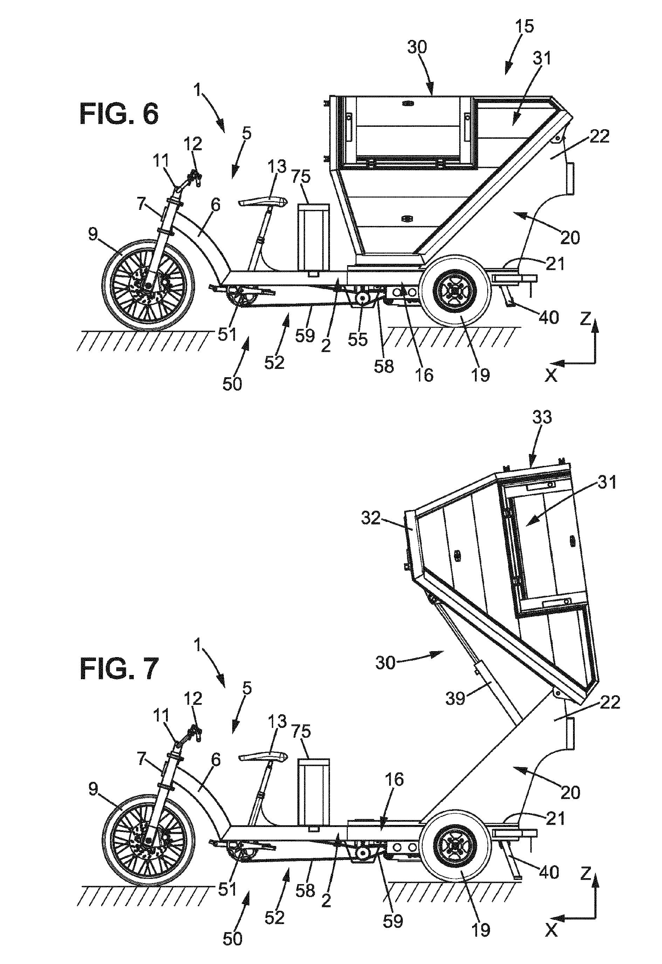

Comme représenté sur les figures 6 et 7, une partie de la benne 31 du côté du panneau arrière 36, au voisinage de l'ouverture de déchargement 34, est montée pivotante autour d'un axe de pivotement 38 horizontal, transversal dans le mode de réalisation particulier, sur l'extrémité libre 22 du bras 20 de la partie de chargement 15. L'axe de pivotement 38 est ainsi agencé derrière l'essieu de la partie de chargement 15.

Le dispositif de chargement 30 peut comprendre un ou plusieurs organes d'actionnement adaptés pour faire basculer la benne 31 vers l'arrière autour de son axe de pivotement 38 de manière à en simplifier le déchargement. En variante, le basculement de la benne 31 pourrait être manuel.

Dans le mode de réalisation, l'organe d'actionnement est un vérin 39 qui s'étend entre le bras 20 du châssis 2 et une partie de la benne 31 au voisinage du fond 32. Dans une position inactive représentée sur la figure 6, le vérin 39 maintient la benne 31 dans une position de chargement dans laquelle une surface de chargement du fond 32 de la benne 31 s'étend globalement dans un plan horizontal. Un chargement, tel que de la terre, des graviers, des déchets verts, des ordures ou autres, peut alors être placé dans la benne 31 en reposant sur la surface de chargement du fond 32, et être transporté sur le triporteur 1. Dans une position active représentée sur la figure 7, le vérin 39 place la benne 31 dans une position de déchargement dans laquelle la surface de chargement du fond 32 de la benne 31 est inclinée par rapport au plan horizontal. Sur la figure 7, le fond 32 de la benne 31 est à la verticale de sorte que le chargement peut glisser sur une surface intérieure du panneau arrière 36 pour être déchargé à l'endroit voulu.

Le triporteur 1 comprend en outre une ou plusieurs béquilles 40 montées sur le châssis 2 pour stabiliser le triporteur 1 notamment lors du déchargement. Dans le mode de réalisation représenté, deux béquilles 40 sont prévues à l'extrémité arrière du bâti 16. Les béquilles 40 sont déplaçables, par exemple coulissantes ou pivotantes autour d'axes transversaux respectifs, entre une position déployée représentée sur la figure 7 et dans laquelle les béquilles 40 reposent sur la surface sur laquelle se tient le triporteur 1 sensiblement en correspondance avec l'axe de pivotement 38 de la benne 31, et une position escamotée représentée sur la figure 6 et dans laquelle les béquilles 40 n'interfèrent pas avec la surface sur laquelle se tient le triporteur 1.

De préférence, le dispositif de chargement 30 est adapté pour faire passer le vérin 39 de la position inactive à la position active uniquement lorsque les béquilles 40 sont dans la position déployée. Ainsi, lorsque le basculement de la benne 31 est commandé par l'utilisateur, les béquilles 40 sont automatiquement déplacées vers leur position déployée pour qu'une fois dans cette position, le vérin 39 puisse passer de sa position inactive à sa position active. L'agencement des béquilles 40 sous la benne 31 en position de déchargement permet de stabiliser le triporteur 1 et d'en éviter le basculement lors du déchargement.

Les dispositions concernant le déplacement, et en particulier le basculement, de la benne 31 par rapport au châssis 2 et concernant les béquilles 40 et leur déploiement asservi à celui du vérin 39 a été décrit en relation avec le triporteur 1 comprenant un pilotage particulier du système d'assistance électrique à faibles vitesses. Ces dispositions pourraient toutefois être prévues de manière indépendante du pilotage.

Par ailleurs, l'invention décrite en relation avec une benne basculante utilisable notamment par des services de nettoyage ou d'entretien des espaces verts n'est pas limitée à un tel mode de réalisation. L'invention s'applique à d'autres domaines, tels que le transport et la livraison de marchandise dans les derniers kilomètres, la vente ambulante, le transport de passagers et autre, avec tout type approprié d'organe de chargement tel qu'un plateau, un fourgon ou autre, déplaçable de toute manière appropriée par rapport au châssis, par exemple simplement amovible, ou non-déplaçable.

## Revendications

1. Véhicule utilitaire (1) à assistance électrique comprenant :
- un châssis (2) comprenant une partie de commande (5) et une partie de chargement (15) attenantes l'une à l'autre selon une direction longitudinale (X), la partie de commande (5) étant adaptée pour recevoir un utilisateur et comportant au moins une roue (9), la partie de chargement (15) comportant au moins deux roues (19) écartées l'une de l'autre selon une direction transversale (Y),
- un organe de commande (11) monté sur la partie de commande (5) du châssis (2) et adapté pour commander au moins une roue directrice choisie parmi la roue (9) de la partie de commande (5) et les roues (19) de la partie de chargement (15),
- un dispositif de chargement (30) monté sur la partie de chargement (15) du châssis (2) et adapté pour recevoir un chargement,
- un système d'entrainement (50) monté sur le châssis (2) et adapté pour entraîner au moins une roue motrice choisie parmi la roue (9) de la partie de commande (5) et les roues (19) de la partie de chargement (15), à partir d'un effort musculaire exercé par l'utilisateur,
- un système d'assistance électrique (70) monté sur le châssis (2) et adapté pour, lorsqu'un effort musculaire est exercé par l'utilisateur sur le système d'entraînement (50) et que le véhicule utilitaire (1) a une vitesse inférieure à une vitesse maximale (Vmax), entraîner la roue motrice en développant une puissance d'assistance,
ledit véhicule utilitaire (1) étant **caractérisé en ce que** le système d'assistance électrique (70) présente une puissance maximale et est adapté pour :
- lorsque le véhicule utilitaire (1) a une vitesse supérieure à une vitesse seuil (Vs), la vitesse seuil (Vs) étant inférieure à la vitesse maximale (Vmax), limiter la puissance d'assistance à une puissance seuil strictement inférieure à la puissance maximale, et
- lorsque le véhicule utilitaire (1) a une vitesse inférieure à la vitesse seuil (Vs), ne pas limiter la puissance d'assistance à la puissance seuil, de manière à développer une puissance allant jusqu'à la puissance maximale.

2. Véhicule utilitaire (1) à assistance électrique selon la revendication 1, dans lequel le système d'assistance électrique (70) est adapté pour :
- lorsque le véhicule utilitaire (1) présente une inclinaison par rapport à l'horizontale inférieure à un angle représentatif d'une pente positive déterminée, limiter la puissance d'assistance à la puissance seuil, et
- lorsque le véhicule utilitaire (1) présente une inclinaison par rapport à l'horizontale supérieure à l'angle représentatif d'une pente positive déterminée, ne pas limiter la puissance d'assistance à la puissance seuil, de manière à développer une puissance allant jusqu'à la puissance maximale.

3. Véhicule utilitaire (1) à assistance électrique selon la revendication 2, dans lequel le système d'assistance électrique est adapté pour :
- lorsque le véhicule utilitaire présente une inclinaison par rapport à l'horizontale supérieure à un angle représentatif d'une pente négative déterminée, limiter la puissance d'assistance.

4. Véhicule utilitaire (1) à assistance électrique selon l'une quelconque des revendications 1 à 3, dans lequel le système d'assistance électrique (70) est adapté pour développer une puissance d'assistance fonction de l'effort musculaire exercé.

5. Véhicule utilitaire (1) à assistance électrique selon l'une quelconque des revendications 1 à 4, dans lequel le système d'assistance électrique (70) comprend un moteur électrique (71) et une batterie électrique (75) adaptée pour alimenter le moteur électrique (71) en énergie électrique, et dans lequel le système d'entrainement (50) comprend un organe d'entraînement (51) monté pivotant sur la partie de commande (5) du châssis (2) autour d'un axe transversal et actionnable par l'utilisateur, et un système de transmission (52) reliant l'organe d'entraînement (51) à la roue motrice par l'intermédiaire du moteur électrique (71).

6. Véhicule utilitaire (1) à assistance électrique selon l'une quelconque des revendications 2 à 5, dans lequel le moteur électrique (71) est monté sur la partie de chargement (15) du châssis (2) et le système de transmission (52) relie le moteur électrique (71) à au moins l'une des roues (19) de la partie de chargement (15) formant la roue motrice.

7. Véhicule utilitaire (1) à assistance électrique selon l'une quelconque des revendications 5 à 6, dans lequel le système de transmission (52) est adapté pour que, lorsque la vitesse du véhicule utilitaire (1) atteint la vitesse maximale (Vmax), la roue motrice entraîne le moteur électrique (71), le moteur électrique (71) exerçant un couple résistant sur la roue motrice.

8. Véhicule utilitaire (1) à assistance électrique selon la revendication 7, dans lequel le système d'assistance électrique (70) est adapté pour, lorsque la roue motrice entraîne le moteur électrique (71), générer de l'énergie électrique et recharger la batterie électrique (75).

9. Véhicule utilitaire (1) à assistance électrique selon l'une quelconque des revendications 5 à 8, dans lequel le moteur électrique (71) est adapté pour bloquer la roue motrice en l'absence d'alimentation en énergie électrique par la batterie électrique (75).

10. Véhicule utilitaire (1) à assistance électrique selon l'une quelconque des revendications 1 à 9, dans lequel le système d'assistance électrique (71) est adapté pour, lorsque le véhicule utilitaire (1) a une vitesse inférieure à une vitesse d'accompagnement, la vitesse d'accompagnement étant inférieure à la vitesse seuil (Vs), entraîner la roue motrice en développant une puissance d'accompagnement indépendante de tout effort musculaire.

11. Véhicule utilitaire (1) à assistance électrique selon l'une quelconque des revendications 1 à 10, dans lequel le dispositif de chargement (30) comprend un organe de chargement (31) présentant une surface de chargement, l'organe de chargement (31) étant déplaçable par rapport au châssis (2) entre une position de chargement dans laquelle la surface de chargement s'étend globalement dans un plan horizontal, et une position de déchargement écartée de la position de chargement.

12. Véhicule utilitaire (1) à assistance électrique selon la revendication 11, dans lequel l'organe de chargement (31) est monté pivotant autour d'un axe de pivotement (38) horizontal, la surface de chargement étant inclinée par rapport au plan horizontal dans la position de déchargement.

13. Véhicule utilitaire (1) à assistance électrique selon la revendication 12, dans lequel l'axe de pivotement (38) est transversal.

14. Véhicule utilitaire (1) à assistance électrique selon la revendication 13, dans lequel la partie de chargement (15) comporte un essieu portant les roues, l'axe de pivotement (38) étant agencé du côté opposé à la partie de commande (5) par rapport à l'essieu.

15. Véhicule utilitaire (1) à assistance électrique selon l'une quelconque des revendications 11 à 14, comprenant en outre au moins une béquille (40) montée déplaçable sur le châssis (2) entre une position déployée dans laquelle ladite béquille (40) repose sur une surface sur laquelle se tient le véhicule utilitaire (1), et une position escamotée, dans laquelle ladite béquille (40) n'interfère pas avec la surface sur laquelle se tient le véhicule utilitaire (1), et dans lequel le dispositif de chargement (30) comprend un organe d'actionnement (39) s'étendant entre le châssis (2) et l'organe de chargement (31), l'organe d'actionnement (39) étant déplaçable entre une position inactive dans laquelle ledit organe d'actionnement (39) maintient l'organe de chargement (31) en position de chargement, et une position active dans laquelle ledit organe d'actionnement (39) place l'organe de chargement (31) en position de déchargement, le dispositif de chargement (30) étant adapté pour faire passer l'organe d'actionnement (39) de la position inactive à la position active uniquement lorsque la béquille (40) est dans la position déployée.
